# EUROPÄISCHE PATENTANMELDUNG

(11) **EP 1 882 924 A2**
(43) Veröffentlichungstag der Anmeldung: **30.01.2008**
(21) Anmeldenummer: 07013371.5
(22) Anmeldetag: 09.07.2007
(51) Int. Cl.: G01N 1/04

(54) **Verfahren, Halter und Vorrichtung zum Bearbeiten von biologischen Objekten**

(30) Priorität: 28.07.2006 DE 102006035016
(71) Anmelder: P.A.L.M. Microlaser Technologies GmbH, 82347 Bernried (DE)
(72) Erfinder: Saegmüller, Bernd, Dr., 82362 Weilheim i.OB (DE)
(74) Vertreter: Banzer, Hans-Jörg

(57) **Zusammenfassung**

Es wird ein Verfahren und eine Vorrichtung zum Bearbeiten von biologischen Objekten bereitgestellt, wobei ein Aufnahmemittel (17) mittels Unterdruck an einem Halter (2) angebracht wird, ein biologisches Objekt insbesondere mittels eines lasergestützten Katapultiervorgangs in das Aufnahmemittel (17) eingebracht wird und das Aufnahmemittel (17) dann durch Aufheben des Unterdrucks freigegeben wird.

## Beschreibung

Die vorliegende Erfindung betrifft ein Verfahren, einen Halter und eine mit dem Halter ausgerüstete Vorrichtung zum Bearbeiten, insbesondere zum lasergestützten Katapultieren, von biologischen Objekten.

Lasergestütztes Katapultieren, auch als Laser Pressure Catapulting (LPC) bekannt, ist ein Verfahren, mit welchem einzelne biologische Objekte aus einer biologischen Masse mittels eines gezielten Laserschusses berührungslos in einen Auffangbehälter katapultiert werden können. Die biologischen Objekte können dabei vorher mittels Laser-Mikrodissektion aus der biologischen Masse herausgeschnitten werden oder direkt herauskatapultiert werden. Dieses lasergestützte Katapultieren ist beispielsweise in der WO 01/733398 A1 erläutert.

Als Auffangbehälter werden dabei beispielsweise Deckel von so genannten Mikrozentrifugenröhrchen verwendet.

Zum automatischen Befüllen einer Mehrzahl derartiger Auffangbehälter mit biologischen Objekten sind in der WO 01/73397 A1 Halter vorgeschlagen, welche eine Vielzahl derartiger Auffangbehälter aufnehmen und über einer biologischen Masse automatisch gesteuert verfahren können, so dass mittels lasergestütztem Katapultieren jeweils ein gewünschter Auffangbehälter mit einem biologischen Objekt befüllt werden kann. Die Auffangbehälter werden dabei in dem Halter beispielsweise durch Klemmen befestigt.

Bei derartigen Haltern werden die Auffangbehälter typischerweise manuell in die Halter eingesetzt, was zeitaufwändig ist und zudem die Gefahr der Kontamination mit sich bringt. Zudem eignen sich diese Halter nur eingeschränkt für biologische Objekte, welche beispielsweise aus runden Vertiefungen, wie sie in Multiwellplatten vorhanden sind, herauskatapultiert werden, da es unter Umständen nicht möglich ist, die Halter nah genug an die biologische Masse heranzufahren, um ein zuverlässiges Katapultieren zu gewährleisten.

Es ist daher eine Aufgabe der vorliegenden Erfindung, ein Verfahren, einen Halter und eine entsprechend ausgestattete Vorrichtung zum lasergestützten Katapultieren zu schaffen, wodurch eine weitgehende Automatisierung eines Befüllens von Auffangbehältern und ein flexibles Befüllen derselben ermöglicht wird.

Diese Aufgabe wird gelöst durch ein Verfahren nach Anspruch 1 oder 2, einen Halter nach Anspruch 10 oder 12 und eine Vorrichtung nach Anspruch 23. Die abhängigen Ansprüche definieren jeweils vorteilhafte oder bevorzugte Ausführungsbeispiele.

Die Erfindung stellt in einem Aspekt ein Verfahren zum Bearbeiten von biologischen Objekten bereit, umfassend Befestigen eines Aufnahmemittels an einem Halter mittels Unterdruck, Einbringen eines biologischen Objekts in das Aufnahmemittel, bevorzugt mit einem Laserschuss, und Freigeben des Aufnahmemittels durch Aufheben des Unterdrucks.

Indem das Aufnahmemittel an dem Halter mittels Unterdruck befestigt wird und das Aufnahmemittel durch Aufheben des Unterdrucks freigegeben wird, ist eine einfache Automatisierung des Aufnehmens und Freigebens des Aufnahmemittels und somit eine einfache Automatisierung der Bearbeitung von biologischen Objekten möglich.

Ein entsprechender Halter ist dementsprechend ausgelegt, ein Aufnahmemittel durch Bilden eines Unterdrucks zu fixieren und durch Aufheben des Unterdrucks freizugeben. Ein derartiger Halter kann insbesondere zur Aufnahme eines als Aufnahmemittel dienenden Deckels eines Mikrozentrifugenbehälters ausgelegt sein.

Dabei kann der Halter eine langgestreckte Form mit einer Krümmung an einem Ende, an welchem das Aufnahmemittel durch Unterdruck befestigt werden kann, aufweisen, so dass eine Aufnahme von biologischen Objekten aus Vertiefungen möglich ist.

Der Halter kann zudem eine Absaugvorrichtung zum Absaugen von Gasen oder Mittel zum Fördern eines Schutzgases zu den Auffangmitteln hin aufweisen.

Die Halterung kann als Roboterarm, insbesondere als Dreiachsroboter ausgebildet sein, wobei ein Ende des Roboterarms, an welchem das Aufnahmemittel zu befestigen ist, lösbar mit dem übrigen Roboterarm verbunden sein kann, so dass dieses Ende beispielsweise auf einfache Weise getrennt sterilisiert werden kann.

Der erfindungsgemäße Halter kann in ein Mikroskopsystem zur Laser-Mikrodissektion und zum lasergestützten Katapultieren integriert sein.

Gemäß einem anderen Aspekt wird ein Verfahren zum Bearbeiten von biologischen Objekten bereitgestellt, umfassend automatisiertes Aufnehmen eines Aufnahmemittels aus einem Vorrat von Aufnahmemitteln mit einem Halter, Einbringen eines biologischen Objekts in das Aufnahmemittel und automatisierte Ablage des Aufnahmemittels.

Dabei kann ein Halter wie oben beschrieben verwendet werden, wobei statt der Maßnahmen zur Erzeugung des Unterdrucks auch andere Mittel zum Festhalten des Aufnahmemittels, z.B. eine Klammer, vorgesehen sein können.

Die Erfindung wird nachfolgend unter Bezugnahme auf die beigefügte Zeichnung anhand bevorzugter Ausführungsbeispiele näher erläutert. Es zeigen:
Fig. 1 ein Ausführungsbeispiel der vorliegenden Erfindung,
Fig. 2 ein erstes Ausführungsbeispiel eines Endstücks aus Fig. 1,
Fig. 3 ein zweites Ausführungsbeispiels eines Endstücks aus Fig. 1,
Fig. 4 ein Aufnehmen von Aufnahmeelementen durch den Halter aus Fig. 1,
Fig. 5 eine Alternativmöglichkeit des Bereitstellens von Aufnahmeelementen,
Fig. 6 eine Draufsicht auf einen Halter aus Fig. 1 bei einem lasergestützten Katapultieren, und
Fig. 7 eine perspektivische Ansicht des Halters und einer Multiwellplatte aus Fig. 6.

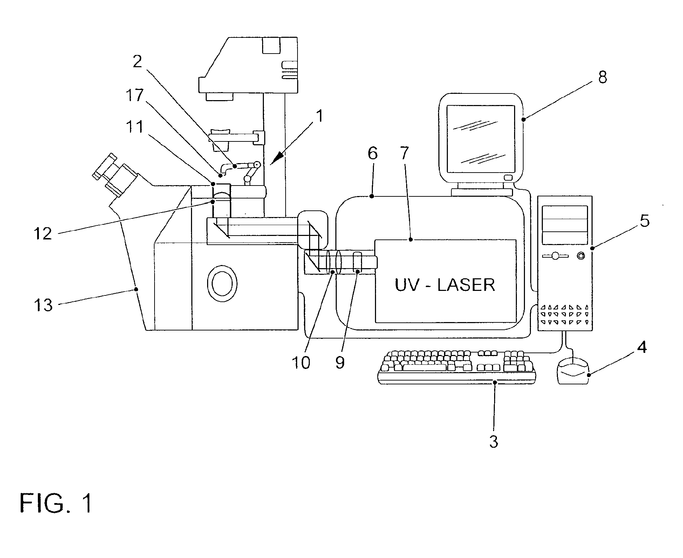

In Fig. 1 ist ein Ausführungsbeispiel einer erfindungsgemäßen Vorrichtung zum Bearbeiten von biologischen Objekten dargestellt. Die in Fig. 1 dargestellte Vorrichtung entspricht dabei weitgehend einem herkömmlichen Laser-Mikrodissektionssystem, wie es auch aus den eingangs zitierten Druckschriften bekannt ist, wobei die dargestellte erfindungsgemäße Vorrichtung im Unterschied zu herkömmlichen Vorrichtungen einen erfindungsgemäßen Halter 1 aufweist.

Neben dem erfindungsgemäßen Halter 1, welcher später detaillierter erläutert werden wird, weist das in Fig. 1 dargestellte erfindungsgemäße Ausführungsbeispiel eine Laservorrichtung 6 auf, in welcher eine Laserlichtquelle 7 zur Erzeugung eines Laserstrahllichtstrahls untergebracht ist. Des Weiteren ist in der Laservorrichtung 6 eine Optik 9, 10 untergebracht, mit welcher der Laserstrahl in ein Mikroskop 13 eingekoppelt wird und ein Laserfokus des Laserstrahls in der Objektebene auf einen optischen Fokus des Mikroskops 13 abgestimmt wird.

Die Laserlichtquelle 7 kann beispielsweise durch einen gepulsten Ultraviolett(UV)-Stickstofflaser gebildet sein. Die Optik 9, 10 umfasst insbesondere ein Neutraldichtefilter 9, mit welchem die Energie des Laserstrahls eingestellt werden kann, und Linsen 10, mit welchem der Laserfokus unabhängig von dem Mikroskopfokus eingestellt werden kann, das heißt der Brennpunkt des Lasers kann in z-Richtung relativ zur Objektebene des Mikroskops 13 verschoben werden.

Der Laserstrahl wird über mehrere beschichtete Strahlteiler in das Mikroskop 13 eingekoppelt und zu einem Objektiv 12 hin gelenkt. Der über das Objektiv 12 emittierte Laserstrahl trifft schließlich auf einen motorisierten Trägertisch 11, auf dem - auf einem Objektträger oder in entsprechenden Behältern - eine zu bearbeitende biologische Masse angeordnet ist. Oberhalb des Trägertisches befindet sich der Halter 1, welcher einen Auffangbehälter 17 zum Auffangen von aus der biologischen Masse mittels Laserstrahlung herausgeschnittenen oder herauskatapultierten biologischen Objekten trägt. Bei dem Auffangbehälter 17 kann es sich insbesondere um einen Deckel ("Cap") eines Mikrozentrifugenröhrchens oder eines Behälters einer Mikrotiterplatte handeln.

Bei dem Mikroskop 13 kann es sich um ein beliebig ausgestaltetes Mikroskop handeln. Insbesondere ist grundsätzlich die Verwendung sowohl eines inversen Mikroskops wie in Fig. 1 gezeigt als auch eines aufrechten Mikroskops oder eines Lasermikroskops denkbar.

Bevorzugt ist das Mikroskop 13 mit einer Videokamera ausgestaltet, welche den Bereich des Trägertisches 11 oberhalb des Objektivs 12 aufnimmt. Das Videosignal dieser Videokamera wird einem Computer 5 zugeführt und dort einer derartigen Bildverarbeitung unterzogen, dass das entsprechende Videobild in Echtzeit auf einem Bildschirm 8 des Computers 5 dargestellt werden kann.

Die Vorrichtung wird über den Computer 5, welchem eine Tastatur 3 und eine Maus 4 zugeordnet ist, mittels entsprechender Software gesteuert. Insbesondere können über den Computer 5 automatisch oder halbautomatisch die Laserlichtquelle 7 inklusive ihrer Pulsrate, der Neutraldichtefilter 9, die Linsen 10, der Trägertisch 11 sowie der Halter 1 gesteuert werden. Zusätzlich oder alternativ ist auch eine manuelle Steuerung denkbar.

Wie bereits erwähnt wird zum Gewinnen von biologischen Objekten entweder mittels des Laserstrahls ein biologisches Objekt aus einer auf dem Trägertisch 11 befindlichen biologischen Masse zumindest weitgehend herausgeschnitten und dann mit einem gezielten Laserschuss in einen von dem Halter 1 gehaltenen Auffangbehälter katapultiert, oder es erfolgt ein direktes Katapultierten mit einem entsprechenden Laserschuss.

Im Folgenden soll nun das in Fig. 1 dargestellte Ausführungsbeispiel eines erfindungsgemäßen Halters 1 näher erläutert werden.

Der Halter 1 in Fig. 1 ist als Dreiachsroboter, welcher durch den Computer 5 gesteuert wird, ausgebildet, und in der Nähe des Trägertisches 11 angeordnet, so dass ein den Auffangbehälter 17 tragendes Ende des Halters 1 dreidimensional über dem Trägertisch 11 verfahren werden kann. Diesbezüglich ist anzumerken, dass der Halter 1 auch weiter entfernt von dem Trägertisch 11 angeordnet sein kann, solange der Halter 1 dann so dimensioniert ist, dass der Auffangbehälter 17 entsprechend über dem Trägertisch positioniert werden kann. Auch sind andere Ausgestaltungen als die Ausgestaltung in Form eines Dreiachsroboters denkbar, solange die gewünschte Positionierung gewährleistet ist.

Bei Verwendung eines aufrechten Mikroskops kann der Halter 1 insbesondere drehbar gelagert sein, um den Aufnahmebehälter in der gewünschten Position unter dem Trägertisch 11 zu positionieren.

Der Halter 1 weist ein Endstück 2 auf, welches bei dem vorliegenden Ausführungsbeispiel lösbar an dem übrigen Halter 1 befestigt ist, beispielsweise durch Schrauben, eine Steckkupplung, eine Magnetkupplung oder jegliche andere Befestigungsmöglichkeit. Diese lösbare Befestigung bietet den Vorteil, dass das Endstück 2 auf einfache Weise abgenommen und beispielsweise sterilisiert oder auch repariert werden kann. Selbstverständlich ist jedoch auch möglich, dass das Endstück 2 ein integraler Bestandteil des Halters 1 ist.

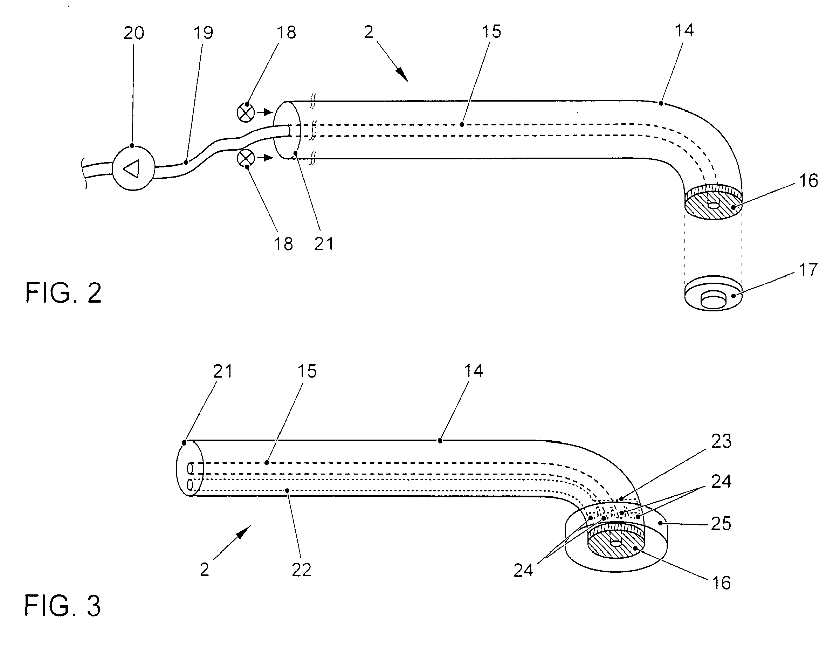

Fig. 2 und 3 zeigen zwei erfindungsgemäße Ausführungsbeispiele des Endstücks 2.

Das in Fig. 2 dargestellte erste Ausführungsbeispiel eines Endstücks 2 weist einen Körper 14 auf, welcher langgestreckt und an einem Ende wie in Fig. 2 dargestellt gekrümmt ist. Der Körper 14 kann dabei massiv oder hohl ausgeführt sein.

In dem Körper 14 verläuft ein Kanal oder Rohr 15, welches hohl ist, so dass durch das Rohr 15 ein Gas strömen kann. An dem gekrümmten Ende des Rohrs 14 ist eine scheibenförmige Dichtung 16 angebracht, welche beispielsweise aus Silikongummi gefertigt sein kann und in der Mitte eine Öffnung entsprechend der Position des Rohres 15 aufweist. Die Dichtung 16 kann beispielsweise eine Dicke von 10 mm aufweisen und an dem Körper 14 durch (nicht dargestellte) Klemmen, beispielsweise Metallklammern, befestigt sein. Es ist jedoch auch möglich, die Dichtung 16 aus einem haftenden Material, beispielsweise aus klebrigem Silikongummi, zu fertigen oder mit einem Haftmittel zu beschichten, so dass die Dichtung 16 an dem Körper 14 haftet. Auf diese Weise kann ein schnelles und einfaches Auswechseln der Dichtung 16 erfolgen. Die Dichtung 16 ist bevorzugt aus einem transparenten Material gefertigt.

Das Rohr 15 ist über einen Schlauch 19 mit einer Pumpe 20 verbunden. An die Dichtung 16 kann ein Auffangelement 17 angesetzt werden, wobei in dem in Fig. 2 dargestellten Ausführungsbeispiel das Aufnahmeelement 17 ein Deckel eines Mikrozentrifugenröhrchens ist. Durch die Pumpe 20 kann dann das Rohr 15 evakuiert werden und somit das Aufnahmeelement 17 durch den entstehenden Unterdruck angesaugt und somit an dem Endstück 2 und dem Halter 1 festgehalten werden. Zum Freigeben des Aufnahmeelements 17 kann dann beispielsweise die Pumpe 20 abgeschaltet werden und/oder das Rohr 15 über eine Ventil belüftet werden, so dass kein Unterdruck in dem Rohr 15 mehr vorhanden ist. Zur Unterstützung der Freigabe kann auch ein geringfügiger Überdruck in dem Rohr 15 erzeugt werden, so dass das Aufnahmeelement 17 abgestoßen wird.

In einem anderen Ausführungsbeispiel kann statt des Rohres 15, der Dichtung 16, des Schlauchs 19 und der Pumpe 20 auch eine Klammer aus Kunststoff oder Metall zum Festhalten des Aufnahmeelements 17 vorgesehen sein. Diese Klammer kann beispielsweise mittels eines Motors geöffnet und geschlossen werden.

Das Endstück 2 umfasst weiterhin eine Beleuchtung 18, welche bei dem dargestellten Ausführungsbeispiel als Ring von Leuchtdioden ausgebildet ist. Das von der Beleuchtung 18, welche in dem Körper 14 angeordnet ist, erzeugte Licht wird durch den Körper 14 zu dem gekrümmten Ende geleitet und beleuchtet somit den Auffangbehälter 17 gleichmäßig. Hierzu ist der Auffangbehälter 17 bevorzugt aus einem lichtstreuenden Material gefertigt, wie es beispielsweise in der WO 02/42824 A2 der Anmelderin beschrieben ist.

Anstelle von ringförmig angeordneten Dioden kann auch jede andere geeignete Beleuchtung eingesetzt werden, beispielsweise eine ringförmige Beleuchtungsröhre, Halogenlampen oder dergleichen, wobei eine gleichmäßige Ausleuchtung durch die Anordnung der Beleuchtung 18 (beispielsweise die ringförmige Anordnung), aber auch durch entsprechende Streuungs- und Lichtleitereigenschaften des Körpers 14 erreicht werden kann.

Wie bereits erwähnt kann das Endstück 2 durch eine Kupplung 21 lösbar an dem übrigen Halter 1 aus Fig. 1 befestigt werden. Der Schlauch 19 kann dann beispielsweise in der Nähe der Befestigungsstelle aus dem Halter heraus und zu der Pumpe 20 hingeführt werden oder auch durch den gesamten Halter 1 zu der Pumpe 20 hin verlaufen.

In Fig. 3 ist ein zweites Ausführungsbeispiel eines erfindungsgemäßen Endstücks 2 dargestellt, welches eine Abwandlung des ersten Ausführungsbeispiels aus Fig. 2 ist. Gleiche Elemente tragen gleiche Bezugszeichen und werden hier nicht nochmals detailliert erläutert. Insbesondere weist auch das zweite Ausführungsbeispiel aus Fig. 3 einen Körper 14, ein in dem Körper 14 verlaufendes Rohr 15 sowie eine Dichtung 16 auf.

Zur Vereinfachung der Darstellung wurden in Fig. 3 der Schlauch 19, die Pumpe 20 sowie die Beleuchtung 18 weggelassen, sie können jedoch selbstverständlich bei dem zweiten Ausführungsbeispiel aus Fig. 3 vorgesehen sein.

Zusätzlich zu dem Rohr 15 verläuft in dem Körper 14 aus Fig. 3 ein weiteres Rohr 22, welches mit einer Mehrzahl von Öffnungen 24 in einer Außenseite des Körpers 14 über einen beispielsweise ringförmig ausgebildeten Querkanal 23 kommuniziert. Zudem weist das Endstück 2 aus Fig. 3 eine überstehende Schürze 25 auf, welche ringförmig ausgebildet ist und von dem Körper 14 beabstandet ist. Durch die Schürze 25 wird ein nach unten offener Raum gebildet, in welchen die Öffnungen 24 münden.

Durch diese Anordnung können über das weitere Rohr 22 und eine an diesem angeschlossene Pumpe bei der Laser-Mikrodissektion entstehende Gase abgesaugt werden. Umgekehrt kann über das weitere Rohr 22 auch ein inertes Schutzgas, beispielsweise Argon, zugeführt werden. Selbstverständlich ist es auch möglich, getrennte Rohre für das Zuführen eines Schutzgases und das Absaugen vorzusehen.

Im Folgenden soll nun die Gewinnung von biologischen Objekten mit Hilfe des dargestellten Ausführungsbeispiels des erfindungsgemäßen Halters 1, welcher ein Endstück 2 aufweist, erläutert werden.

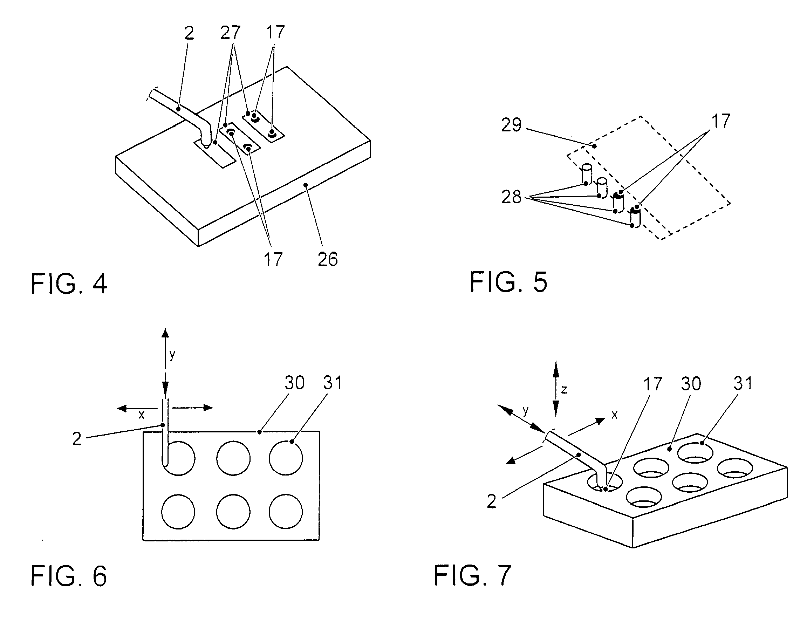

Zunächst wird durch den erfindungsgemäßen Halter 1 ein Auffangbehälter 17 aufgenommen. Dies kann wie in Fig. 4 skizziert dadurch geschehen, dass eine Mehrzahl von Auffangbehältern 17 in Vertiefungen 27 eines Vorrats 26 bereitgestellt werden, wobei sich die Auffangbehälter 17 an vorgegebenen Positionen befinden. Der Halter 22 kann dann automatisch derart zu den jeweiligen Positionen der Auffangbehälter 17 gesteuert werden, dass die in Fig. 2 bzw. 3 dargestellte Silikondichtung den Auffangbehälter berührt oder annähernd berührt. Wird dann die Pumpe 20 eingeschaltet, entsteht ein Unterdruck, und der Auffangbehälter haftet durch den Unterdruck an dem Endstück 2 des Halters 1.

Alternativ können in einem Halter 29 eine Mehrzahl von Mikrozentrifugenröhrchen 28 bereitgestellt sein, welche mit Auffangbehältern 17 in Form von entsprechenden Deckeln abgedeckt sind. Diese Auffangbehälter 17 können dann mit Hilfe des Halters 1 ähnlich wie in Fig. 4 dargestellt aufgenommen werden. Hierzu ist es hilfreich, wenn die Aufnahmeelemente 17 nur relativ locker auf den Röhrchen 28 sitzen oder die Röhrchen 28 in der Halterung 29 entsprechend festgehalten werden, so dass der Auffangbehälter 17 durch den Halter 1 abgenommen werden kann.

Als weitere (nicht dargestellte) Alternative ist es möglich, einen Auffangbehälter manuell an den Halter zu halten, so dass er durch Betätigen der Pumpe 20 angesaugt werden kann.

Nach der Aufnahme des Auffangbehälters wird der Halter 1 und insbesondere das Endstück 2 über den Trägertisch 11 gefahren, um ein biologisches Objekt mittels lasergestütztem Katapultieren aufzunehmen. Eine entsprechende biologische Masse, aus welcher biologische Objekte ausgeschnitten werden, kann dabei beispielsweise in einer Multiwellplatte angeordnet sein. Dies ist beispielhaft in Fig. 6 und Fig. 7 gezeigt, wobei Fig. 6 eine Draufsicht auf eine Multiwellplatte 30 mit sechs Vertiefungen 31 zeigt, während Fig. 7 eine perspektivische Ansicht zeigt.

In einer oder mehreren Vertiefungen 31 befindet sich eine biologische Masse, aus welcher ein biologisches Objekt ausgeschnitten und katapultiert oder direkt katapultiert wird. Wie insbesondere in Fig. 7 zu sehen, kann durch die gekrümmte Form des Endstücks 2 der Auffangbehälter 17 dicht über die biologische Masse gefahren werden und durch die runde Form des Endstücks 2 und des Auffangbehälters 17 in dem vorliegenden Ausführungsbeispiel auch über am Rand der Vertiefungen 31 liegende Teile der biologischen Masse gefahren werden. Hierzu kann, wie bereits erläutert, das Endstück 2 in alle drei Raumrichtungen x, y und z verfahren werden.

Nach der Aufnahme des biologischen Objekts kann der Auffangbehälter 17 durch Aufheben des Unterdrucks, beispielsweise durch Ausschalten der Pumpe 20, freigegeben werden und manuell abgenommen werden. Es ist ebenso möglich, den Halter 2 wieder über Mikrozentrifugenbehälter 28 wie in Fig. 5 dargestellt oder andere Behälter zu fahren und den Auffangbehälter 2 wieder auf ein entsprechenden Mikrozentrifugenröhren zu setzen. Auf diese Weise ist kein manueller Eingriff nötig.

Selbstverständlich ist die vorliegende Erfindung auch auf andere Auffangbehälter als Deckel von Mikrozentrifugenröhrchen anwendbar. Gegebenenfalls muss hierzu die Form der Dichtung 16 entsprechend angepasst werden, wenn größere Auffangbehälter festgehalten werden sollen, oder es können auch mehrere Rohre 15 vorgesehen sein, um ein flächiges Festhalten zu ermöglichen. Auch kann sich die biologische Masse in anderer Weise als in einer Multiwellplatte auf dem Trägertisch 11 befinden, beispielsweise auf einem Objektträger.

## Patentansprüche

1. Verfahren zum Bearbeiten biologischer Objekte, umfassend:
Befestigen eines Aufnahmemittels (17) an einem Halter (1, 2) mittels Unterdruck,
Einbringen eines biologischen Objekts in das Aufnahmemittel (17), und
Freigeben des Aufnahmemittels (17) durch Aufheben des Unterdrucks.

2. Verfahren zum Bearbeiten biologischer Objekte, umfassend:
automatisiertes Aufnehmen eines Aufnahmemittels (17) mit einem Halter (1, 2) aus einem Vorrat (26) von Aufnahmemitteln (27),
Einbringen eines biologischen Objekts in das Aufnahmemittel, und
automatisierte Ablage des Aufnahmemittels.

3. Verfahren nach Anspruch 2,
wobei das Aufnahmemittel (17) mit einer Klammer an dem Halter (1, 2) befestigt wird.

4. Verfahren nach einem der Ansprüche 1 bis 3,
wobei das Einbringen des biologischen Objekts in das Aufnahmemittel (17) einen lasergestützten Katapultvorgang umfasst.

5. Verfahren nach einem der vorhergehenden Ansprüche,
wobei zum Einbringen des biologischen Objekts das Aufnahmemittel (17) durch Bewegen des Halters über einer das biologische Objekt umfassende biologische Masse positioniert wird.

6. Verfahren nach einem der vorhergehenden Ansprüche,
umfassend ein Absaugen von Gas aus einer Umgebung des Aufnahmemittels (17).

7. Verfahren nach einem der vorhergehenden Ansprüche,
umfassend das Zuführen von einem Schutzgas in eine Umgebung des Aufnahmemittels (17).

8. Verfahren nach einem der vorhergehenden Ansprüche,
wobei das Aufnahmemittel einen Deckel (17) eines Mikrozentrifugenbehälters umfasst.

9. Verfahren nach einem der vorhergehenden Ansprüche,
wobei das Verfahren in einem Mikroskopaufbau (13) durchgeführt wird.

10. Halter (1, 2) zum Bearbeiten von biologischen Objekten,
umfassend eine Fläche (16) zum Anlegen eines Aufnahmemittels (17), und Ansaugmittel (15, 19, 20) zum Ansaugen des Aufnahmemittels (17) an die Fläche (16) mittels Unterdruck und zum Freigeben der Aufnahmemittel (17) durch Aufheben des Unterdrucks.

11. Halter (1, 2) nach Anspruch 10,
wobei die Ansaugmittel einen durch einen Körper (14) des Halters (1, 2) verlaufenden Kanal (15) und mit dem Kanal (15) verbundene Pumpmittel (20) umfassen.

12. Halter (1, 2) zum Bearbeiten von biologischen Objekten,
umfassend eine Fläche (16) zum Anbringen eines Aufnahmemittels (17) und Festhaltemittel (15, 19, 20) zum Festhalten des Aufnahmemittels (17) bei der Fläche (16), wobei Steuermittel (5) zum Steuern des Halters zur automatisierten Aufnahme und Ablage des Aufnahmemittels (17) vorgesehen sind.

13. Halter nach Anspruch 12,
wobei die Festhaltemittel eine Klammer umfassen.

14. Halter (1, 2) nach einem der Ansprüche 10 bis 13,
wobei ein der Fläche (16) benachbartes Ende des Halters (1, 2) gekrümmt ausgebildet ist.

15. Halter (1, 2) nach einem der Ansprüche 10 bis 14,
wobei der Halter Positioniermittel (1) zum Positionieren des Halters umfassen.

16. Halter (1, 2) nach Anspruch 15,
wobei die Positioniermittel einen Dreiachsroboter (1) umfassen.

17. Halter (1, 2) nach einem der Ansprüche 10 bis 16,
wobei der Halter (1, 2) ein mit dem übrigen Halter lösbar verbundenes Endstück (2), welches die Fläche (16) umfasst, umfasst.

18. Halter (1, 2) nach einem der Ansprüche 10 bis 17,
wobei der Halter (1, 2) zumindest teilweise aus einem transparenten Material gefertigt ist.

19. Halter (1, 2) nach einem der Ansprüche 10 bis 18,
wobei der Halter eine Beleuchtung (18) zum Beleuchten der Aufnahmemittel (17) umfasst.

20. Halter (1, 2) nach Anspruch 19,
wobei die Beleuchtung (18) ringförmig angeordnete Leuchtdioden umfasst.

21. Halter (1, 2) nach einem der Ansprüche 10 bis 20,
wobei der Halter Mittel (22, 23, 24, 25) zum Absaugen von Gas aus einer Umgebung des Aufnahmemittels (17) und/oder zum Zuführen von Gas zu einer Umgebung des Aufnahmemittels (17) umfasst.

22. Halter (1, 2) nach einem der Ansprüche 10 bis 21,
wobei die Fläche (16) durch eine Dichtung gebildet wird.

23. Vorrichtung zur Bearbeitung von biologischen Objekten,
mit einem Laser (7), einer Mikroskopanordnung (13) mit einem Trägertisch (11) und einem Halter (1, 2) nach einem der Ansprüche 10 bis 22,
wobei der Halter (1, 2) derart positionierbar und steuerbar ist, dass auf dem Trägertisch (11) befindliche Objekte lasergestützt in ein an dem Halter (1, 2) angebrachtes Aufnahmemittel (17) katapultiert werden können.

24. Vorrichtung nach Anspruch 23,
wobei die Vorrichtung zur Durchführung des Verfahrens nach einem der Ansprüche 1 bis 9 ausgestaltet ist.
